## Europäisches Patentamt
## European Patent Office
## Office européen des brevets

(19)

(11) Veröffentlichungsnummer: **0 117 548**
**B1**

(12)

# EUROPÄISCHE PATENTSCHRIFT

(45) Veröffentlichungstag der Patentschrift:
**10.06.87**

(51) Int. Cl.⁴: **A 22 B 5/12**

(21) Anmeldenummer: **84101949.0**

(22) Anmeldetag: **24.02.84**

(54) **Vorrichtung zum kontinuierlichen Brühen von Schlachttieren.**

(30) Priorität: **28.02.83 DE 3306953**

(43) Veröffentlichungstag der Anmeldung:
**05.09.84 Patentblatt 84/36**

(45) Bekanntmachung des Hinweises auf die Patenterteilung:
**10.06.87 Patentblatt 87/24**

(84) Benannte Vertragsstaaten:
**AT CH DE FR GB LI**

(56) Entgegenhaltungen:
**CH-A-528 221**
**DE-B-1 054 267**
**DE-B-1 220 283**
**FR-A-2 396 499**
**US-A-1 568 282**
**US-A-1 834 479**

(73) Patentinhaber: **Weiss, Alois, Im Letten, D-7081 Oberalfingen (DE)**

(72) Erfinder: **Weiss, Alois, Im Letten, D-7081 Oberalfingen (DE)**

(74) Vertreter: **Dipl.- Phys.Dr. Manitz Dipl.- Ing., Dipl.- Wirtsch. Finsterwald Dipl.- Chem.Dr. Heyn Dipl.- Phys. Rotermund Morgan, B.Sc.(Phys.), Robert- Koch- Strasse 1, D-8000 München 22 (DE)**

## Beschreibung

Die Erfindung betrifft eine Vorrichtung zum kontinuierlichen Brühen von Schlachttieren, insbesondere Schweinen, bestehend aus einem das Brühwasser aufnehmenden Trog und einer umlaufenden Transporteinrichtung, welche die Tiere von einer Einwurfstation auf einer unter der Wasseroberfläche verlaufenden Bahn zu einer Auswurfstation bewegt, wobei der Brühtrog im Längsschnitt die Form eines Kreisabschnitts oder einer Wanne mit gekrümmt, insbesondere kreisformig gekrümmt verlaufenden Stirnwänden besitzt.

Eine derartige Vorrichtung ist aus der CH-A-528 221 bekannt. Bei dieser Vorrichtung besteht die umlaufende Transporteinrichtung aus mehreren, um eine Achse umlaufenden Auswerferorganen, die durch an einer Antriebswelle befestigte Stäbe gebildet sind.

Mit einer derartigen Vorrichtung ist es möglich, die zu brühenden Tiere einerseits definiert unterzutauchen und andererseits unter Erzielung eines ausgezeichneten Brüheffekts durch das eine bestimmte Temperatur aufweisende Brühwasser zu transportieren. Wesentlich ist dabei auch, daß das Brühwasser ständig in Bewegung gehalten wird, und zwar entweder durch zeitweise ruckartige Bewegung der Fördermittel oder vorzugsweise durch eine ständige Umwälzung des Brühwassers mittels Pumpen oder sonstigen das Brühwasser in Bewegung versetzenden Einrichtungen.

Aufgabe der vorliegenden Erfindung ist es, eine Vorrichtung der eingangs angeführten Art konstruktiv einfach, robust und dennoch sehr zuverlässig arbeitend auszubilden und die Konzeption so zu wählen, daß die Vorrichtung problemfrei an unterschiedliche Leistungen angepaßt werden kann.

Gelöst wird diese Aufgabe im wesentlichen dadurch, daß die Transportvorrichtung aus aneinandergrenzend angeordneten Stabfächern aus einer Vielzahl von parallel zueinander angebrachten Paaren von an Querrohren befestigten Einzelstäben besteht, wobei der eine in jedem Paar eingehende Stab zwischen aufeinanderfolgenden Querrohren verläuft und der andere in jedem Paar eingehende Stab mit dem einen Stab etwa einen rechten Winkel bildet, und daß die Stabfächer von einer Laschenkettenanordnung getragen sind, die aus zwei Laschenketten gebildet ist, welche jeweils im Bereich der Trogseitenwände verlaufen und um Förderradpaare geführt sind, von denen wenigstens eines angetrieben ist.

Von Vorteil ist es bei einer derartigen Vorrichtung, daß mittels geeigneter, insbesondere seitlich vorgesehener Einlaßöffnungen turbulente Brühwasserströmungen erzeugt werden können, die sicherstellen, daß an der Tierkörperoberfläche abkühlendes Wasser sofort durch neues Wasser mit Solltemperatur ersetzt wird. Da die gemäß der Erfindung vorgesehenen Stabfächer einwurfseitig aufgrund der speziellen Führung der die Stabfächer tragenden Querrohre aufgeweitet sind und in diesem Bereich die größten Temperaturunterschiede zwischen Brühwasser und Tierkörper auftreten, ergibt sich der vorteilhafte Effekt, daß die Tiere gerade in diesem kritischen Bereich innerhalb der Stabfächer noch eine gute Bewegungsfreiheit haben und damit der Brühwasseraustausch an der Tierkörperoberfläche leicht vonstatten geht.

Besonders vorteilhafte Ausgestaltungen der Erfindung sind in den Unteransprüchen angegeben, wobei darauf hinzuweisen ist, daß die durch die gezielte Führung der die Stabfächer tragenden Querrohre eintretende Vergrößerung, Verkleinerung und anschließende Wiedervergrößerung der Stabfächer während des Transports der Tiere durch den Brühtrog überraschend vorteilhafte Effekte erbringt.

Die Nockenscheibenanordnungen, in die die über Laschenketten miteinander verbundenen Querrohre eingreifen, zeichnen sich durch besondere Robustheit und Betriebssicherheit aus.

Durch die Möglichkeit, die Stabfächer über die seitlichen Führungen, in die die Querrohre eingreifen, definiert der jeweiligen Behälterform anzupassen, wird auch sichergestellt, daß die Tiere stets einwandfrei unter Wasser gehalten werden, wobei eine gewisse vertikale Elastizität bzw. Nachgiebigkeit der Gesamtanordnung sich ebenfalls vorteilhaft auswirkt und dazu beiträgt, daß die Tiere während ihres Transports durch das Brühwasser auch noch zusätzlich bewegt werden oder diese Bewegung im Zusammenhang mit der Brühwasserumwälzung erleichtert wird.

Die Erfindung wird nachfolgend anhand eines Ausführungsbeispiels unter Bezugnahme auf die Zeichnung näher erläutert; in der Zeichnung zeigt:

Fig. 1 eine schematische Querschnittsansicht eines Durchlaufbrühtrogs nach der Erfindung in Einlegestellung,

Fig. 2 die Ausgestaltung der Stabfächer und die Lage der Nockenscheiben relativ zu den Trogseitenwänden, und

Fig. 3 Anordnung und Ausgestaltung der Verbindungslaschen für die Querrohre.

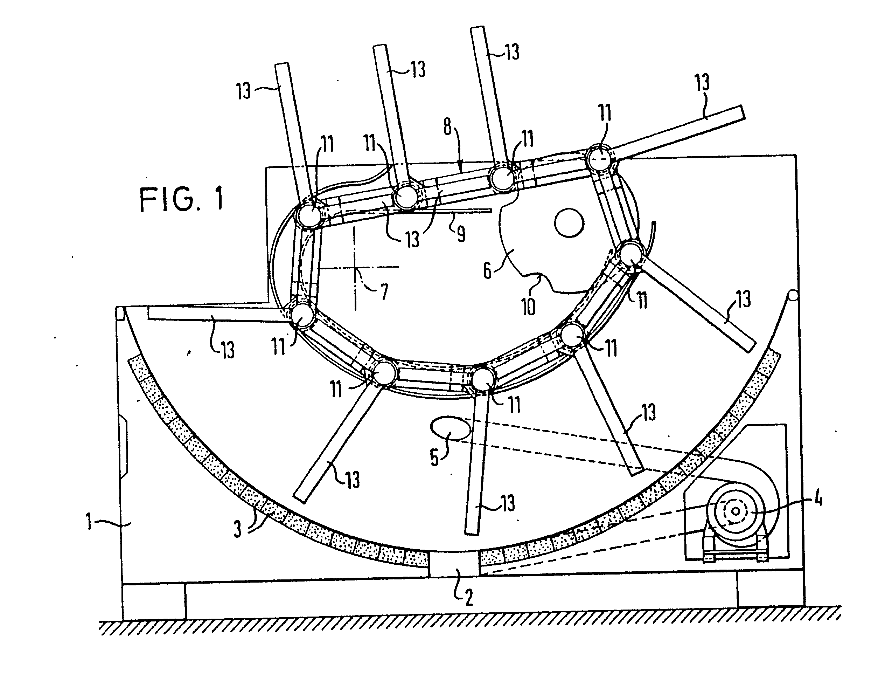

Nach Fig. 1 besitzt der Brühtrog 1 im Längsschnitt die Form eines aufgeweiteten Kreisabschnitts, ist bodenseitig mit einer Brühwasserauslaßöffnung 2 versehen und vorzugsweise mit einer wirksamen Isolierung 3 ausgestattet. Eine Pumpe 4 ist zur Umwälzung des Brühwassers vorgesehen und über Leitungen mit dem Auslaß 2 und wenigstens einem seitlichen Einlaß 5 verbunden.

Zwei beabstandete Nockenscheibenanordnungen 6, 7 (nur die Nockenscheibe 6 ist in der Zeichnung voll dargestellt) tragen eine Laschenkettenanordnung 8. Diese Laschenkettenanordnung kann über entsprechend gebogene Führungen 9 so geführt sein, daß sich stets eine ganz definierte Bewegungsbahn ergibt.

Die Nockenscheibe 6 besitzt über ihren Umfang gleichmäßig verteilt mehrere Ausnehmungen 10, die der Form der Querrohre 11 angepaßt sind. Derartige Nockenscheiben 6 sind einfach zu fertigen und äußerst betriebssicher im Zusammenwirken mit den Querrohren 11. In der Praxis genügt es, vier Ausnehmungen 10 pro Nockenscheibe 6 vorzusehen.

Die auswurfseitige Nockenscheibe 6 ist bezüglich der einwurfseitigen Nockenscheibe 7 höher angeordnet, wodurch sich eine optimale Führungsbahn von der Einwurfseite zur Auswurfseite ergibt.

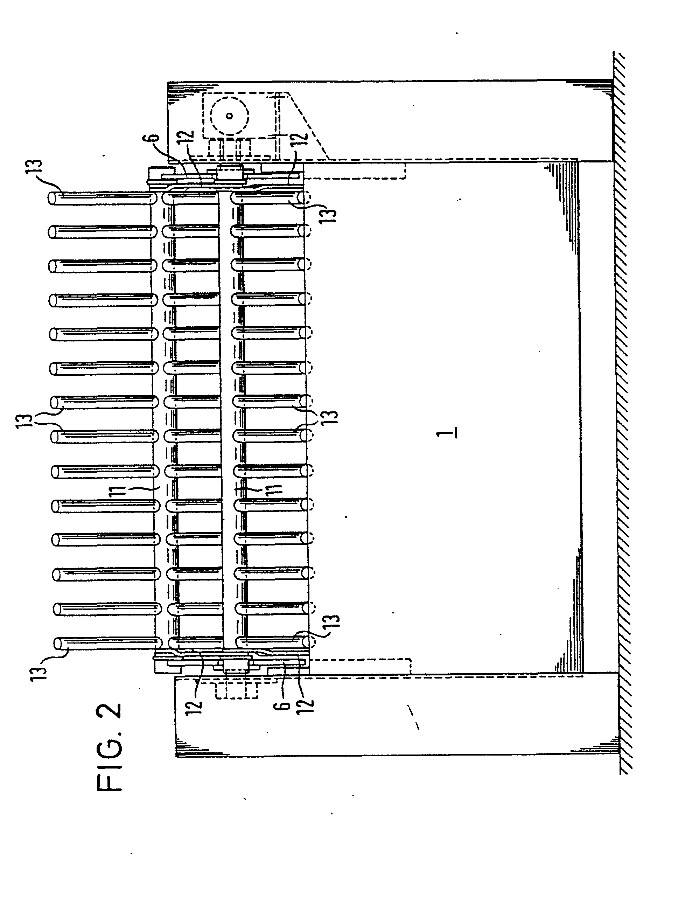

Fig. 2 zeigt die Lage der Nockenscheiben 6 in unmittelbarer Nähe der Seitenwandungen des Brühtrogs und läßt erkennen, wie raumsparend diese Gesamtanordnung ist. Der Antrieb kann direkt benachbart einer Nockenscheibe 6 angebracht sein.

Zu sehen ist in Fig. 2 auch, daß die Querrohre 11 stets formschlüssig in die Ausnehmungen 10 der Nockenscheibe 6 eingreifen und daß diese Querrohre 11 Lagerachsen für die Verbindungslaschen 12 bilden.

Eine Vielzahl von Stäben 13, die als kurze Rohre ausgebildet sein können, ist mit den Querrohren 11 fest verbunden. Eine Gruppe dieser Rohre erstreckt sich etwa radial nach außen, während die andere Gruppe sich zwischen den Querrohren 11 erstreckt, wie dies deutlich in Fig. 1 zu sehen ist.

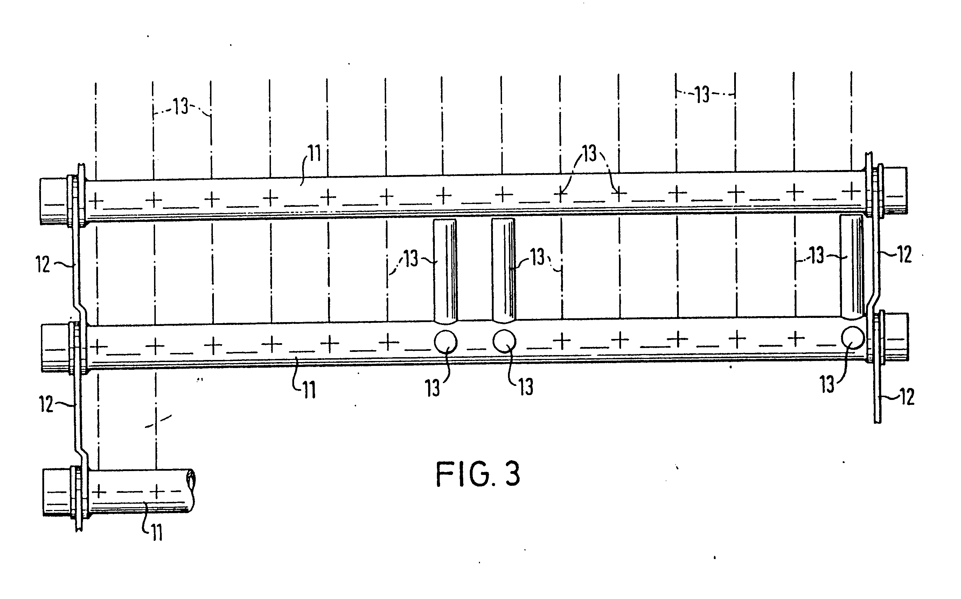

Die Anordnung und Ausgestaltung der Verbindungslaschen 12 ist der Fig. 3 zu entnehmen. Jeweils ein Ende der Laschen 12 ist mit einem Querrohr 11 fest verschweißt, während das andere Ende mit dem benachbarten Querrohr 11 drehbar verbunden bzw. drehbar auf diesem Querrohr gelagert ist. Damit ergibt sich eine Laschenkettenanordnung mit ganz definierter Relativlage der die Aufnahmefächer festlegenden Stäbe 13.

Die Lage der etwa rechtwinklig zueinander angeordneten Stabgruppen 13 wird über die Laschenketten und deren Abknickbewegungen bei der Umlenkung über die Nockenscheiben 6 vorgegeben. Im Bereich unterhalb des Wasserspiegels ergeben sich definierte Aufnahmefächer und eine vergleichsweise flache Bewegungsbahn.

Ein großer Vorteil der beschriebenen Anordnung ist, daß durch Hinzunahme von Laschenabschnitten die Gesamtanordnung in ihren Abmessungen leicht variiert werden kann, so daß eine problemfreie Anpassung an die jeweiligen Bedürfnisse gegeben ist und lediglich die Troggröße entsprechend gewählt werden muß. Durch die modifizierbare Laschenkettenanordnung kann man sich sehr leicht unterschiedlichen Trogformen anpassen und die Leistungsfähigkeit entsprechend wählen.

Die Nockenscheiben eignen sich sehr gut zur Kraftaufnahme, sind sehr einfach zu fertigen und gewährleisten einen sicheren und definierten Transport, wobei praktisch keine Gefahr besteht, daß der Wirkeingriff zwischen Laschenketten und Nockenscheiben durch ungleichmäßige Belastung und dergleichen verloren geht.

Es kann daher mit immer gleichen Grundelementen, nämlich Laschenkettenabschnitten mit entsprechend angebrachten Stabgruppen 13 und wenigstens zwei Nockenscheibenpaaren nach Art eines Baukastensystems der jeweils optimale Durchlaufbrühtrog zusammengestellt werden. Auch ein Arbeiten mit zwischen den beiden Endnockenscheibenanordnungen angeordneten Stütznocken ist möglich, wenn dies von der Praxis gefordert werden sollte.

**Patentansprüche**

1. Vorrichtung zum kontinuierlichen Brühen von Schlachttieren, insbesondere Schweinen, bestehend aus einem das Brühwasser aufnehmenden Trog (1) und einer umlaufenden Transporteinrichtung, welche die Tiere von einer Einwurfstation auf einer unter der Wasseroberfläche verlaufenden Bahn zu einer Auswurfstation bewegt, wobei der Brühtrog (1) im Längsschnitt die Form eines Kreisabschnitts oder einer Wanne mit gekrümmt, insbesondere kreisförmig gekrümmt verlaufenden Stirnwänden besitzt, dadurch gekennzeichnet, daß die Transportvorrichtung aus aneinandergrenzend angeordneten Stabfächern aus einer Vielzahl von parallel zueinander angebrachten Paaren von an Querrohren (11) befestigten Einzelstäben (13) besteht, wobei der eine in jedem Paar eingehende Stab zwischen aufeinanderfolgenden Querrohren verläuft und der andere in jedem Paar eingehende Stab mit dem einen Stab etwa einen rechten Winkel bildet, und daß die Stabfächer von einer Laschenkettenanordnung (8) getragen sind, die aus zwei Laschenketten gebildet ist, welche jeweils im Bereich der Trogseitenwände verlaufen und um Förderradpaare (6, 7) geführt sind, von denen wenigstens eines angetrieben ist.

2. Vorrichtung nach Anspruch 1, dadurch gekennzeichnet, daß die Förderradpaare (6, 7) aus Nockenscheiben bestehen, in deren am Umfang vorgesehene Ausnehmungen (10) die Stabfächer tragenden Querrohre (11) zumindest im wesentlichen formschlüssig eingreifen.

3. Vorrichtung nach Anspruch 1 oder 2, dadurch gekennzeichnet, daß die Stäbe der Stabfächer zwischen aufeinanderfolgenden Querrohren (11) kürzer sind als die dazu im wesentlichen rechtwinklig verlaufenden Stäbe.

4. Vorrichtung nach einem der vorhergehenden Ansprüche, dadurch gekennzeichnet, daß die Querrohre (11) zumindest in dem durch das Brühwasser führenden Bereich mit ihren freien Enden in gekrümmten Führungsschienen (9) laufen.

5. Vorrichtung nach einem der vorhergehenden Ansprüche, dadurch gekennzeichnet, daß jede Lasche (12) der Laschenkette an einem Ende fest mit einem Querrohr (11) und am anderen Ende mit dem nächsten Querrohr schwenkbar verbunden ist.

6. Vorrichtung nach einem der vorhergehenden Ansprüche, dadurch gekennzeichnet, daß die Führungsschienen (9) für die Querrohre (11) derart gekrümmt sind, daß die abstehenden Stäbe (13) der Stabfächer in der Einwurfposition im wesentlichen horizontal liegen und in der Auswurfposition schräg nach unten zeigen.

7. Vorrichtung nach einem der vorhergehenden Ansprüche, dadurch gekennzeichnet, daß die Stäbe der Stabfächer aus Rohren bestehen, die mit den Querrohren (11) verschweißt sind.

8. Vorrichtung nach einem der vorhergehenden Ansprüche, dadurch gekennzeichnet, daß der Brühtrog (1) mit einer Wärmeisolierung (3) ausgestattet und mit einer Brühwasserumwälzung (4, 5) versehen ist.

9. Vorrichtung nach einem der vorhergehenden Ansprüche, dadurch gekennzeichnet, daß die einwurfseitigen Förderradpaare (7) tiefer angeordnet sind als die auswurfseitigen Förderradpaare (6).

10. Vorrichtung nach einem der vorhergehenden Ansprüche, dadurch gekennzeichnet, daß die Stabfächer einwurfseitig und auswurfseitig durch die Umlenkung der Laschenkette aufgeweitet werden.


## Claims

1. Apparatus for the continuous scalding of slaughtered animals, in particular pigs, comprising a trough (1) which accommodates the scalding water and a circulating transport device which moves the animals from an entry station along a path beneath the water surface to an exit station, wherein the scalding trough (1) has in longitudinal section the shape of a portion of a circle or of a trough with curved front and rear walls, in particular of circular curvature, characterized in that the transport device comprises a plurality of pairs of individual rods (13) secured to transverse tubes (11), with the pairs being mounted parallel to one another, wherein the one rod of each pair extends between sequential transverse tubes and the other rod of each pair forms approximately a right angle with the one rod; and in that the rod compartments are carried by a plate link chain arrangement (8) which is formed by two plate link chains which respectively extend in the region of the side walls of the trough and are guided around conveyor wheel pairs (6, 7) of which at least one is driven.

2. Apparatus in accordance with claim 1, characterized in that the conveyor wheel pairs (6, 7) consist of cam discs with the transverse tubes (11) carrying the rod compartments engaging in at least substantially form locked manner in the recesses (10) provided at the periphery of the cam discs.

3. Apparatus in accordance with claim 1 or claim 2, characterized in that the rods of the rod compartments between sequential transverse tubes (11) are shorter than the rods which extend substantially at right angles thereto.

4. Apparatus in accordance with one of the preceding claims, characterized in that the transverse tubes (11) extend with their free ends in curved guide rails (9) at least in the region which leads through the scalding water.

5. Apparatus in accordance with one of the preceding claims, characterized in that each link (12) of the plate link chain is fixedly secured at one end with one transverse tube (11) and is pivotally connected at the other end with the next transverse tube.

6. Apparatus in accordance with one of the preceding claims, characterized in that the guide rails (9) for the transverse tubes (11) are curved in such a way that the sticking-out tubes (13) of the rod compartments lies substantially horizontal in the entry position and point obliquely downwardly in the exit position.

7. Apparatus in accordane with one of the preceding claims, characterized in that the rods of the rod compartments consist of tubes which are welded to the transverse tubes (11).

8. Apparatus in accordance with one of the preceding claims, characterized in that the scalding trough (1) is provided with thermal insulation (3) and with scalding water recirculation (4, 5).

9. Apparatus in accordance with one of the preceding claims, characterized in that the entry side conveyor wheel pair (7) is disposed lower than the exit side conveyor wheel pair (6).

10. Apparatus in accordance with one of the preceding claims, characterized in that the rod compartments are broadened out at the entry side and at the exit side by the change of direction of the plate link chain.


## Revendications

1. Dispositif pour l'échaudage continu d'animaux abattus, notamment de porcs, constitué par une auge (1) recevant l'eau d'échaudage, et un dispositif rotatif d'entraînement, qui déplace les animaux depuis un poste d'introduction jusqu'à un poste d'éjection, sur une bande située au-dessous de la surface de l'eau, l'auge d'échaudage (1) possédant, en coupe longitudinale, la forme d'un segment circulaire ou d'une cuvette avec des parois frontales cintrées, notamment cintrées avec une forme circulaire, caractérisé en ce que le dispositif d'entraînement est formé par des casiers à barreaux contigus, constitués par une multiplicité de couples, parallèles entre eux, de barreaux individuels (13) fixés à des tubes transversaux (11), un barreau faisant partie de chaque couple s'étendant entre des tubes transversaux successifs et l'autre barreau faisant partie de chaque couple faisant approximativement un angle droit avec le premier barreau, et que les casiers à barreaux sont portés par un dispositif (8) à chaînes articulées, qui est formé par deux chaînes articulées qui s'étendent chacune au voisinage des parois latérales de l'auge et sont guidées autour de couples (6, 7) de roues d'entraînement, dont l'un au moins est entraîné.

2. Dispositif selon la revendication 1, caractérisé par le fait que les couples (6, 7) de roues d'entraînement sont constitués par des disques à cames, où les tubes transversaux (11) portant les casiers à barreaux s'engagent au moins essentiellement selon une liaison par formes complémentaires dans les évidements (10) prévus sur le pourtour de ces disques.

3. Dispositif selon la revendication 1 ou 2, caractérisé en ce que les barreaux des casiers à barreaux entre des tubes transversaux (11) successifs sont plus courts que les barreaux qui sont sensiblement perpendiculaires à ces tubes.

4. Dispositif selon l'une des revendications précédentes, caractérisé par le fait qu'au moins dans la zone située dans l'eau d'échaudage, les tubes transversaux (11) s'étendent par leurs extrémités libres dans des rails de guidage cintrés (9).

5. Dispositif selon l'une des revendications précédentes, caractérisé en ce que chaque maillon (12) de la chaîne articulée est relié à une extrémité rigidement à un tube transversal (11) et que son autre extrémité est reliée, de manière à pouvoir pivoter, au tube transversal immédiatement suivant.

6. Dispositif selon l'une des revendications précédentes, caractérisé par le fait que les rails de guidage (9) pour les tubes transversaux (11) sont cintrés de telle sorte que les barreaux saillants (13) des casiers à barreaux sont sensiblement horizontaux dans la position d'introduction et sont dirigés obliquement vers le bas dans la position d'éjection.

7. Dispositif selon l'une des revendications précédentes, caractérisé par le fait que les barreaux des casiers à barreaux sont constitués par des tubes qui sont soudés aux tubes transversaux (11).

8. Dispositif selon l'une des revendications précédentes, caractérisé par le fait que l'auge d'échaudage (1) est équipée d'un calorifugeage (3) et est munie d'un système (4, 5) de circulation de l'eau d'échaudage.

9. Dispositif selon l'une des revendications précédentes, caractérisé par le fait que les couples (7) de roues d'entraînement, situés sur le côté introduction, sont disposés plus bas que les couples (6) de roues d'entraînement, situés sur le côté éjection.

10. Dispositif selon l'une des revendications précédentes, caractérisé en ce que les casiers à barreaux s'élargissent, sur le côté introduction et sur le côté éjection, par suite du renvoi de la chaîne articulée.

FIG. 1

0 117 548

FIG. 2

0 117 548

FIG. 3

0 117 548